# EUROPEAN PATENT APPLICATION

(11) **EP 0 707 212 A2**
(43) Date of publication of application: **17.04.1996**
(21) Application number: 95114484.9
(22) Date of filing: 14.09.1995
(51) Int. Cl.: G01P 15/10

(54) **Acceleration sensor**

(30) Priority: 14.09.1994 JP 247184/94; 14.09.1994 JP 247185/94; 14.09.1994 JP 247186/94; 15.11.1994 JP 307028/94
(71) Applicant: MURATA MANUFACTURING CO., LTD., Nagaokakyo-shi Kyoto-fu 226 (JP)
(72) Inventor: Kaneko, Takayuki, c/o Maruta Manuf. Co., Ltd., Nagaokakyo-shi, Kyoto-fu (JP); Nakamura, Takeshi, c/o Maruta Manuf. Co., Ltd., Nagaokakyo-shi, Kyoto-fu (JP)
(74) Representative: Schoppe, Fritz, Dipl.-Ing.

(57) **Abstract**

An acceleration sensor 10 includes a vibrator 12 which vibrates in a longitudinal direction. The vibrator 12 includes, for example, a rectangular vibrating body 14, on both main surfaces of the vibrating body 14, piezoelectric elements 16a-16d are formed. A vicinity of a nodal portion on one end side in the longitudinal direction of the vibrator 12 is supported by supporting members 24. In a vicinity of a nodal portion on the other end side in the longitudinal direction of the vibrator 12, fixing members 26 are formed, and weights 28 are fixed to the fixing members 26.

## Description

### BACKGROUND OF THE INVENTION

### Field of the Invention

The present invention relates to an acceleration sensor, and particularly, to an acceleration sensor having a cantilever structure which vibrates in a longitudinal direction.

### Description of the Prior Art

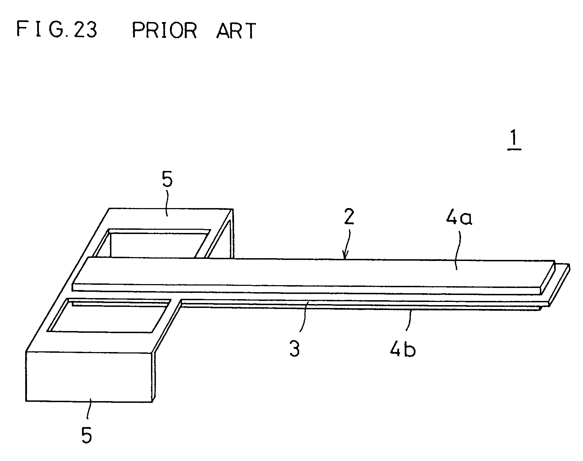

Fig. 23 is a perspective view showing an example of a conventional acceleration sensor which is a background of the present invention. The acceleration sensor 1 includes a vibrator 2 which vibrates in a longitudinal direction. The vibrator 2 is formed to bend when receiving acceleration in a direction orthogonal to its main surface. The vibrator 2 includes, for example, a rectangular vibrating body 3. On both main surfaces of the vibrating body 3, two piezoelectric elements 4a and 4b are formed oppositely. The piezoelectric elements 4a and 4b respectively include piezoelectric layers, on both main surfaces of the piezoelectric layers, electrodes are formed respectively. Each electrode on each one main surface of the piezoelectric layers is bonded to each main surface of the vibrating body 3. The piezoelectric layers of the piezoelectric elements 4a and 4b are polarized, in a thickness direction, from the outside toward the side of the vibrating body 3, respectively.

On one end side in the longitudinal direction of the vibrator 2, two supporting members 5 are formed. In this case, the two supporting members 5 are extended laterally from a vicinity of one end portion of the vibrating body 3, and are formed integrally with the vibrating body 3. The supporting members 5 are for supporting one end side of the vibrator 2 in a cantilever fashion.

In the acceleration sensor 1 shown in Fig. 23, one end side of the vibrator 2 is supported by fixing the supporting members 5. When driving signals of the same phase are applied to the two piezoelectric elements 4a and 4b of the acceleration sensor 1, the vibrator 2 vibrates in the longitudinal direction. In this case, the center portion between the piezoelectric elements 4a and 4b serves as a nodal portion of the vibrator 2 vibrating in the longitudinal direction.

When acceleration is applied in the direction orthogonal to the main surface of the vibrator 2, the vibrating body 3 bends together with the piezoelectric elements 4a and 4b responsive to the acceleration, and voltages produced in the piezoelectric elements 4a and 4b are changed by impedance change of the piezoelectric elements 4a and 4b responsive to the flexure. Thus, by measuring the voltage change caused by the impedance change of either of the piezoelectric elements 4a and 4b, the acceleration can be detected.

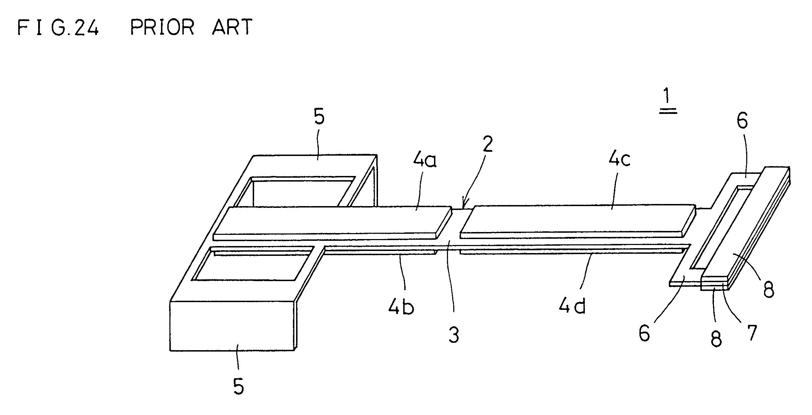

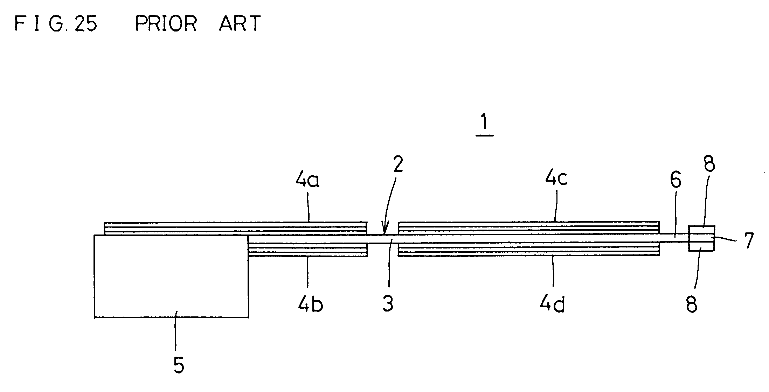

Fig. 24 is a perspective view showing another example of the conventional acceleration sensor, and Fig. 25 is a side view thereof. The acceleration sensor 1 includes a vibrator 2 which vibrates in a longitudinal direction. The vibrator 2 includes, for example, a rectangular vibrating body 3. On both main surfaces of one end side portion from the center in the longitudinal direction of the vibrating body 3, two piezoelectric elements 4a and 4b are formed oppositely. Similarly, on both main surfaces of the other end side portion from the center in the longitudinal direction of the vibrating body 3, two piezoelectric elements 4c and 4d are formed oppositely. The piezoelectric elements 4a-4d respectively include piezoelectric layers, on both main surfaces of the piezoelectric layers, electrodes are formed respectively. Each electrode on each one main surface of the piezoelectric layers is bonded to each main surface of the vibrating body 3. The piezoelectric layers of the piezoelectric elements 4a and 4b are polarized, in a thickness direction, from the outside toward the side of the vibrating body 3, respectively. Reversely, the piezoelectric layers of the piezoelectric elements 4c and 4d are polarized, in a thickness direction, from the side of the vibrating body 3 toward the outside, respectively.

On one end side in the longitudinal direction of the vibrator 2, two supporting members 5 are formed. In this case, the two supporting members 5 are extended laterally from a nodal portion and an end portion on one end side in the longitudinal direction of the vibrating body 3, and are formed integrally with the vibrating body 3. The supporting members 5 are for firmly supporting a vicinity of the nodal portion on one end side of the vibration 2.

On the other end side in the longitudinal direction of the vibrator 2, a fixing member 7 is formed via thin connecting members 6. In this case, the connecting members 6 and the fixing member 7 are extended from an end portion of the other end side in the longitudinal direction of the vibrating body 3, and are formed integrally with the vibrating body 3. On both main surfaces of the fixing member 7, weights 8 are fixed by bonding, welding or soldering. The weights 8 are for increasing the flexure of the vibrator 2 caused by acceleration.

In the acceleration sensor 1 shown in Fig. 24 and Fig. 25, when the vicinity of the nodal portion on one end side of the vibrator 2 is firmly supported by fixing the supporting members 5, and driving signals of the same phase are applied to the four piezoelectric elements 4a-4d, the vibrator 2 vibrates in the longitudinal direction. In this case, since the piezoelectric elements 4a, 4b and the piezoelectric elements 4c, 4d are polarized in the opposite directions, they are reversely displaced one another. Thus, when one end side portion from the center in the longitudinal direction of the vibrating body 3 extends, the other end side portion from the center in the longitudinal direction of the vibrating body 3 contracts. Reversely, when one end side portion from the center in the longitudinal direction of the vibrating body 3 contracts, the other end side portion from the center in the longitudinal direction of the vibrating body 3 extends. In this case, since an expansion amount of one end side portion from the center in the longitudinal direction of the vibrating body 3 and an expansion amount of the other end side portion from the center in the longitudinal direction of the vibrating body 3 are canceled one another, the distance between opposite ends in the longitudinal direction of the vibrating body 3 hardly changes. Furthermore, in this case, the vibrating body 3 vibrates about the center portion between the piezoelectric elements 4a and 4b and the center portion between the piezoelectric elements 4c and 4d as nodal portions. The vibrating body 3 vibrates about opposite end portions in its longitudinal direction as antinodal portions.

When acceleration is applied to the vibrating body 3 of the vibrator 2 in the direction orthogonal to its main surface, the vibrating body 3 bends together with the piezoelectric elements 4a-4d responsive to the acceleration, and voltages produced in the piezoelectric elements 4a-4d are changed by impedance change of the piezoelectric elements 4a-4d responsive to the flexure. Thus, by measuring the voltage change caused by the impedance change of either of the piezoelectric elements 4a-4d, the acceleration can be detected.

However, in a so-called bimorph structure in which the piezoelectric elements 4a and 4b are formed on both surfaces of the vibrating body 3, since the vibrating body 3 and the piezoelectric elements 4a and 4b are in a three-layer structure, it hardly bends, results in a small output sensitivity of the acceleration sensor.

In the acceleration sensor 1 shown in Fig. 24 and Fig. 25, for the purpose of minimizing the effect of the weights 8 on vibration of the vibrator 2, the connecting members 6 between the vibrator 2 and the weights 8 are formed thinner so that the vibration of the vibrator 2 is absorbed by the connecting members 6 and is hardly transmitted to the weights 8.

However, when the connecting members 6 are formed thinner as such, strength of the vibrator 2 for supporting the weights 8 is deteriorated, thus when acceleration is applied to the acceleration sensor 1, displacement of the weights 8 caused by the acceleration is hardly transmitted to the vibrator 2, results in a poor acceleration detecting sensitivity.

Furthermore, in the acceleration sensor 1 shown in Fig. 24 and Fig. 25, since the vibrator 2 has a cantilever structure, the vibrator 2 has a resonance frequency of bending vibration and resonates at the resonance frequency. Thus, the piezoelectric elements 4a-4d produce impedance change and voltage change responsive to the resonance, the voltage change influences negatively on the acceleration detecting sensitivity.

Conventionally, for preventing such resonance, though there is a method of sealing the vibrator by silicone oil and the like, it is very troublesome.

### SUMMARY OF THE INVENTION

Therefore, it is a primary object of the present invention to provide an acceleration sensor having a good acceleration detecting sensitivity.

An acceleration sensor according to the present invention is an acceleration sensor comprising a plate-shaped vibrating body, piezoelectric elements oppositely formed on both surfaces of the vibrating body, and a supporting means for supporting a vicinity of one end portion of the vibrating body, wherein a hole is formed in the vicinity of one end portion of the vibrating body supported by the supporting means. A plurality of the holes may be formed in the vicinity of one end portion of the vibrating body. It is preferable that the hole is formed at a nodal portion of the vibrating body.

It is preferable that a plurality of sets of the piezoelectric elements are oppositely formed on both surfaces of the vibrating body, and the vibrating body vibrates in its longitudinal direction so that both sides of the center in its longitudinal direction are extended and contracted reversely.

Since the hole is formed in the vicinity of one end portion of the vibrating body, the vibrating body is facilitated to bend by acceleration, results in a good acceleration detecting sensitivity.

According to the present invention, since the vibrating body is facilitated to bend by the hole formed in the vicinity of one end portion of the vibrating body, the acceleration sensor having a good acceleration detecting sensitivity can be obtained.

By forming a plurality of sets of the piezoelectric elements oppositely on both surfaces of the vibrating body, and by vibrating the vibrating body in its longitudinal direction so that both sides of the center in its longitudinal direction are extended and contracted reversely, the total length of the vibrating body hardly changes and vibration leakage is suppressed, thus the acceleration sensor having a better acceleration detecting sensitivity can be obtained.

It is another object of the present invention to provide an acceleration sensor, wherein vibration of the vibrator is hardly hindered by the weight and the strength of the vibrator for supporting the weight is strong.

The present invention is directed to an acceleration sensor having a cantilever structure and comprising, a vibrator vibrating in a longitudinal direction and having two or more nodal portions, wherein a weight is fixed in a vicinity of one of the nodal portions of the vibrator.

Meanwhile, the vibrator of the acceleration sensor according to the present invention comprises, for example, a plate-shaped vibrating body, and piezoelectric elements formed on both main surfaces of the vibrating body. The acceleration sensor according to the present invention further comprises, for example, a supporting member for supporting the vibrator formed in a vicinity of another of the nodal portions of the vibrator.

Since the weight is fixed in the vicinity of the one of the nodal portions of the vibrator, even when the strength of the vibrator for supporting the weight is strengthened, vibration of the vibrator is hardly transmitted to the weight, thus it is hardly hindered by the weight.

According to the present invention, the acceleration sensor, wherein the vibration of the vibrator is hardly hindered by the weight and the strength of the vibrator for supporting the weight is strong, can be obtained. Thus, in the acceleration sensor according to the present invention, the displacement of the weight caused by acceleration can be easily transmitted to the vibrator, improving the acceleration detecting sensitivity.

It is a still another object of the present invention to provide an acceleration sensor having a good acceleration detecting sensitivity.

The present invention is directed to an acceleration sensor having a cantilever structure and comprising, a plate-shaped vibrating body vibrating in a longitudinal direction and having two nodal portions, wherein a hole is formed at the nodal portion on the supporting side of the vibrating body.

Meanwhile, in the acceleration sensor according to the present invention, for example, the vibrating body is supporting in a vicinity of one of the nodal portions, and a weight is fixed in a vicinity of the other of the nodal portions of the vibrating body.

Since the hole is formed at the nodal portion on the supporting side of the vibrating body, the flexure of vibrating body caused by acceleration becomes larger, thus the acceleration detecting sensitivity is improved.

According to the present invention, the acceleration sensor having a good acceleration detecting sensitivity can be obtained.

It is a further object of the present invention to provide an acceleration sensor capable of restricting resonance of the vibrator by a simple structure.

The present invention is directed to an acceleration sensor having a cantilever structure and comprising, a vibrator vibrating in a longitudinal direction and having two nodal portions, and further comprising, a supporting member for firmly supporting the vibrator in a vicinity of one of the nodal portions, and an elastic member for elastically supporting the vibrator in a vicinity of the other of the nodal portions.

Meanwhile, in the acceleration sensor according to the present invention, a weight may be fixed in the vicinity of the other of the nodal portions of the vibrator. As the elastic member used in the acceleration sensor according to the present invention, an elastic material such as rubber or a spring such as a coil spring and a plate spring is used.

The vibrator is firmly supported by the supporting member in the vicinity of the one of the nodal portions, and is elastically supported by the elastic member in the vicinity of the other of the nodal portions. Thus, resonance of the vibrator is restricted by the elastic member.

According to the present invention, the acceleration sensor capable of restricting the resonance of the vibrator by a simple structure can be obtained. Thus, in the acceleration sensor according to the present invention, the acceleration detecting sensitivity is improved.

The above and other objects, features, aspects and advantages of the present invention will become more apparent from the following detailed description of the embodiments with reference to the accompanying drawings.

### BRIEF DESCRIPTION OF THE DRAWINGS

Fig. 1 is an exploded perspective view showing a first embodiment of the present invention.

Fig. 2 is a side view of the first embodiment.

Fig. 3 is an illustrative view showing an essential portion of a vibrating body of the first embodiment.

Fig. 4 is an exploded perspective view showing a second embodiment of the present invention.

Fig. 5 is a side view of the second embodiment.

Fig. 6, Fig. 7 and Fig. 8 are illustrative views showing essential portions of modifications of the vibrating body.

Fig. 9 is a perspective view showing a third embodiment of the present invention.

Fig. 10 is a side view of the third embodiment.

Fig. 11 is a perspective view showing a fourth embodiment of the present invention.

Fig. 12 is an exploded perspective view showing a fifth embodiment of the present invention.

Fig. 13 is an exploded perspective view showing a sixth embodiment of the present invention.

Fig. 14 is a perspective view showing a seventh embodiment of the present invention.

Fig. 15 is a front view of the seventh embodiment.

Fig. 16 is a side view of the seventh embodiment.

Fig. 17 is a perspective view showing an eighth embodiment of the present invention.

Fig. 18 is a front view of the eighth embodiment.

Fig. 19 is a perspective view showing a ninth embodiment of the present invention.

Fig. 20 is a front view of the ninth embodiment.

Fig. 21 is a perspective view showing a tenth embodiment of the present invention.

Fig. 22 is a side view of the tenth embodiment.

Fig. 23 is a perspective view showing an example of a conventional acceleration sensor which is a background of the present invention.

Fig. 24 is a perspective view showing another example of the conventional acceleration sensor.

Fig. 25 is a side view of the acceleration sensor shown in Fig. 24.

### DESCRIPTION OF THE PREFERRED EMBODIMENTS

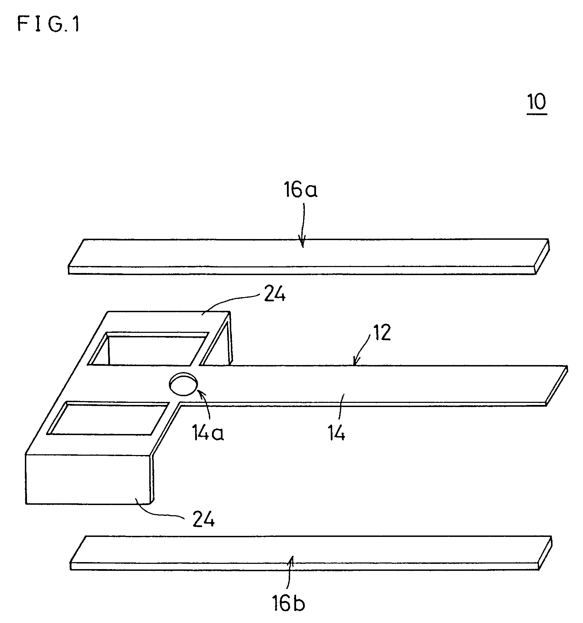

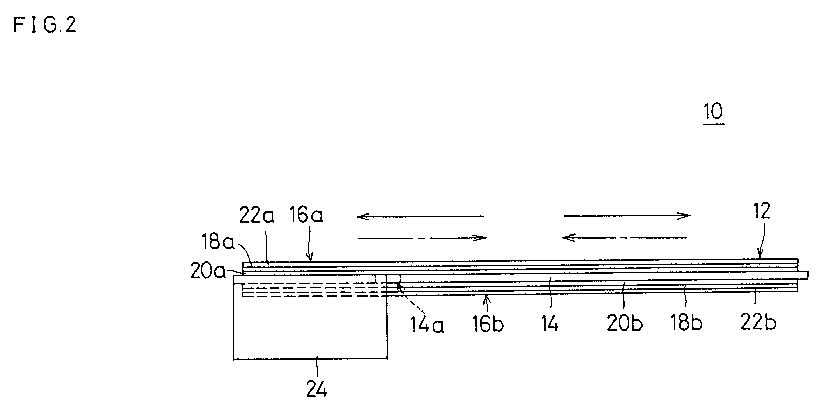

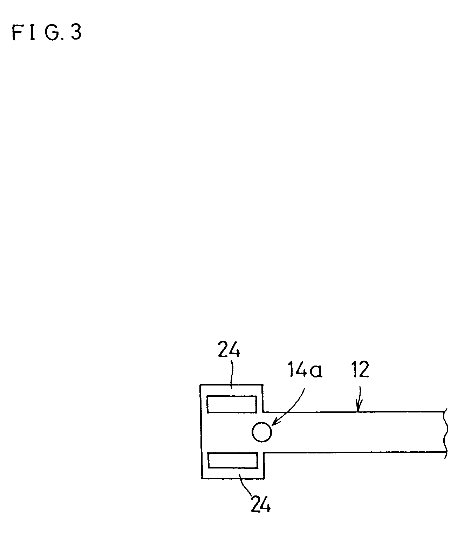

Fig. 1 is an exploded perspective view showing a first embodiment of the present invention, Fig. 2 is a side view of the first embodiment, and Fig. 3 is an illustrative view showing an essential portion of a vibrating body of the first embodiment. The acceleration sensor 10 includes a vibrator 12 which vibrates in a longitudinal direction.

The vibrator 12 includes, for example, a rectangular vibrating body 14. The vibrating body 14 is formed with a constant elastic metal material such as nickel, iron, chromium, titanium, or their alloy such as elinvar, iron-nickel alloy and the like. Meanwhile, the vibrating body 14 may be formed with a material which generally generates a mechanical vibration such as quartz, glass, crystal, ceramic besides metal.

On both main surfaces of the vibrating body 14, two piezoelectric elements 16a and 16b are formed oppositely. One piezoelectric element 16a includes a piezoelectric layer 18a consisting of, for example, ceramic, and on both main surfaces of the piezoelectric layer 18a, electrodes 20a and 22a are formed respectively. The electrode 20a is bonded to one main surface of the vibrating body 14 by means of an adhesive. Similarly, the other piezoelectric element 16b includes a piezoelectric layer 18b consisting of, for example, ceramic, and on both main surfaces of the piezoelectric layer 18b, electrodes 20b and 22b are formed respectively. The electrode 20b is bonded to the other main surface of the vibrating body 14 by means of an adhesive. The piezoelectric layers 18a and 18b of the piezoelectric elements 16a and 16b are polarized, in a thickness direction, from the electrodes 22a and 22b toward the electrodes 20a and 20b, or from the outside toward the side of the vibrating body 14.

The vibrator 12 vibrates in the longitudinal direction when driving signals of the same phase are applied to the piezoelectric elements 16a and 16b. In this case, the vibrator 12 vibrates about the center portion between the piezoelectric elements 16a and 16b as a nodal portion. The vibrator 12 vibrates about opposite end portions in the longitudinal direction as anti-nodal portions.

To an approximate center portion on the supporting side of the vibrating body 14, for example, a circular hole 14a is formed. The hole 14a is formed by etching or pressing the vibrating body 14. A diameter of the hole 14a is about one half of the width of the vibrating body 14 in the first embodiment. The hole 14a is designed to facilitate the vibrating body 14 to bend by acceleration.

On one end side in the longitudinal direction of the vibrator 12, two supporting members 24 are formed. Each supporting member 24 has a flat C-shaped structure. Each one end portion of the C-shaped supporting members 24 is connected to one end portion in the longitudinal direction of the vibrating body 14, and each the other end portion of the C-shaped supporting members 24 is connected to a portion spaced a prescribed distance from one end portion in the longitudinal direction of the vibrating body 14. Thus, the other end portions of the two supporting members 24 are connected to both sides of the hole 14a. The two supporting members 24 are extended laterally outward from the vibrating body 14, and are formed integrally with the vibrating body 14.

In the acceleration sensor 10, when one end side of the vibrator 12 is supported by fixed the two supporting members 24, and driving signals of the same phase are applied to the two piezoelectric elements 16a and 16b, the vibrator 12 vibrates in the longitudinal direction as shown by arrows with solid lines and arrows with one-dot-chain lines in Fig. 2.

When acceleration is applied to the vibrating body 14 of the vibrator 12 in the direction orthogonal to its main surface, the vibrating body 14 bends together with the piezoelectric elements 16a and 16b responsive to the acceleration, and voltages produced in the piezoelectric elements 16a and 16b are changed by impedance change of the piezoelectric elements 16a and 16b responsive to the flexure. Thus, by measuring the voltage change caused by the impedance change of either of the piezoelectric elements 16a and 16b, the acceleration can be detected. Meanwhile, it is also possible to detect the acceleration by detecting the difference of the voltage change produced in the piezoelectric elements 16a and 16b.

In the acceleration sensor 10, the hole 14a is formed at the approximate center portion spaced the prescribed distance from one end portion in the longitudinal direction of the vibrating body 14 and supported by the supporting members 24. The portion, where the hole 14a is formed, serves as a nodal portion of the flexure in the direction orthogonal to the main surface of the vibrating body 14. By forming the hole 14a at this portion, the vibrating body 14 is facilitated to bend by acceleration. Thus, the acceleration sensor 10 has a good acceleration detecting sensitivity.

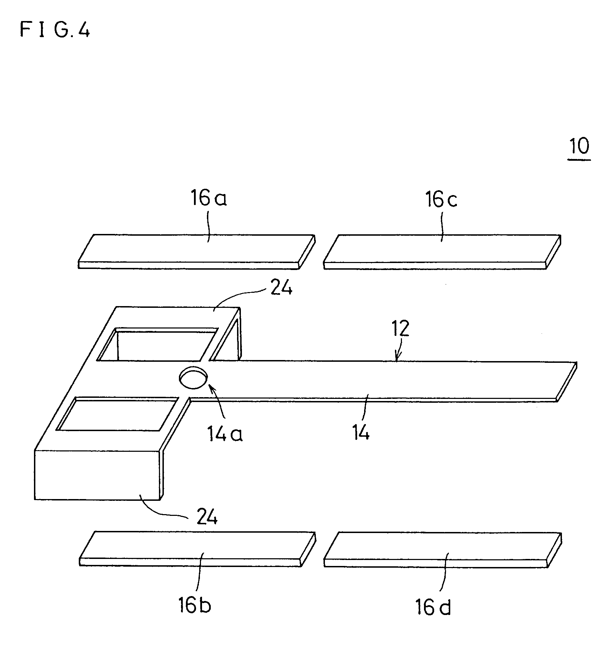

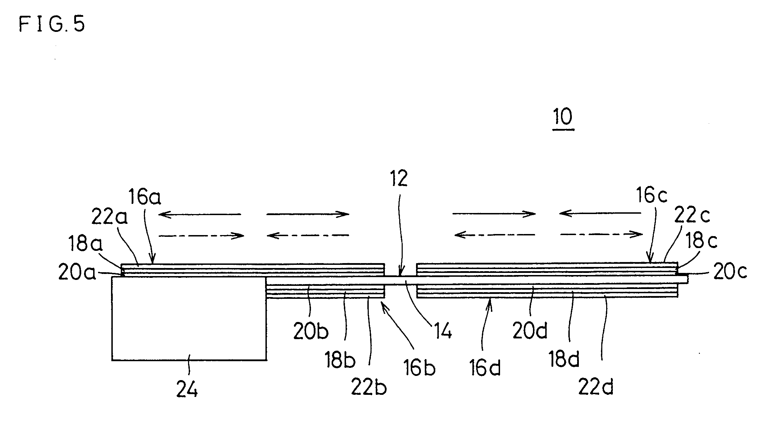

Fig. 4 is an exploded perspective view showing a second embodiment of the present invention, and Fig. 5 is a side view of the second embodiment. The acceleration sensor 10 of the second embodiment includes a vibrator 12 which vibrates in a longitudinal direction. The vibrator 12 of the second embodiment includes, for example, a rectangular vibrating body 14 as same as the first embodiment shown in Fig. 1 through Fig. 3.

On both main surfaces of one end side portion from the center in the longitudinal direction of the vibrating body 14, two piezoelectric elements 16a and 16b are formed oppositely. One piezoelectric element 16a includes a piezoelectric layer 18a consisting of, for example, ceramic, and on both main surfaces of the piezoelectric layer 18a, electrodes 20a and 22a are formed respectively. The electrode 20a is bonded to one main surface of the vibrating body 14 by means of an adhesive. Similarly, the other piezoelectric element 16b includes a piezoelectric layer 18b consisting of, for example, ceramic, and on both main surfaces of the piezoelectric layer 18b, electrodes 20b and 22b are formed respectively. The electrode 20b is bonded to the other main surface of the vibrating body 14 by means of an adhesive. The piezoelectric layers 18a and 18b of the piezoelectric elements 16a and 16b are polarized, in a thickness direction, from the electrodes 22a and 22b toward the electrodes 20a and 20b, or from the outside toward the side of the vibrating body 14.

Furthermore, on both main surfaces of the other end side portion from the center in the longitudinal direction of the vibrating body 14, two piezoelectric elements 16c and 16d are formed oppositely. One piezoelectric element 16c includes a piezoelectric layer 18c consisting of, for example, ceramic, and on both main surfaces of the piezoelectric layer 18c, electrodes 20c and 22c are formed respectively. The electrode 20c is bonded to one main surface of the vibrating body 14 by means of an adhesive. Similarly, the other piezoelectric element 16d includes a piezoelectric layer 18d consisting of, for example, ceramic, and on both main surfaces of the piezoelectric layer 18d, electrodes 20d and 22d are formed respectively. The electrode 20d is bonded to the other main surface of the vibrating body 14 by means of an adhesive. The piezoelectric layers 18c and 18d of the piezoelectric elements 16c and 16d are polarized, in a thickness direction, from the electrodes 20c and 20d toward the electrodes 22c and 22d, or from the side of the vibrating body 14 toward the outside.

The vibrator 12 vibrates in the longitudinal direction when driving signals of the same phase are applied to the piezoelectric elements 16a-16d. In this case, since the piezoelectric elements 16a, 16b and the piezoelectric elements 16c, 16d are polarized in the opposite directions, they are reversely displaced one another. Thus, as shown by arrows with solid lines in Fig. 5, when one end side portion from the center in the longitudinal direction of the vibrating body 14 extends, the other end side portion from the center in the longitudinal direction of the vibrating body 14 contracts. Reversely, as shown by arrows with one-dot-chain lines in Fig. 5, when one end side portion from the center in the longitudinal direction of the vibrating body 14 contracts, the other end side portion from the center in the longitudinal direction of the vibrating body 14 extends. In this case, since an expansion amount of one end side portion from the center in the longitudinal direction of the vibrating body 14 and an expansion amount of the other end side portion from the center in the longitudinal direction of the vibrating body 14 are canceled one another, the distance between opposite ends in the longitudinal direction of the vibrating body 14 hardly changes. Furthermore, in this case, the vibrating body 14 vibrates about the center portion between the piezoelectric elements 16a and 16b and the center portion between the piezoelectric elements 16c and 16d as nodal portions. The vibrating body 14 also vibrates about opposite end portions in its longitudinal direction as anti-nodal portions.

To the nodal portion on one end side in the longitudinal direction of the vibrating body 14 of the vibrator 12, for example, a circular hole 14a is formed. The hole 14a is formed by etching or pressing the vibrating body 14. A diameter of the hole 14a is about one half of the width of the vibrating body 14 in the second embodiment. The hole 14a is designed to facilitate the vibrating body 14 to bend by acceleration.

On one end side in the longitudinal direction of the vibrator 12, two supporting members 24 are formed. Each supporting member 24 has a flat C-shaped structure. Each one end portion of the C-shaped supporting members 24 is connected to one end portion in the longitudinal direction of the vibrating body 14, and each the other end portion of the C-shaped supporting members 24 is connected to the nodal portion on one end side in the longitudinal direction of the vibrating body 14. Thus, the other end portions of the two supporting members 24 are connected to both sides of the hole 14a. The two supporting members 24 are extended laterally outward from the vibrating body 14, and are formed integrally with the vibrating body 14.

In the acceleration sensor 10 of the second embodiment, when one end side of the vibrator 12 is supported by fixing the two supporting members 24, and driving signals of the same phase are applied to the four piezoelectric elements 16a-16d, the vibrator 12 vibrates in the longitudinal direction as shown by the arrows with the solid lines and the arrows with the one-dot-chain lines in Fig. 5.

In this case, since the total length of the vibrator 12 is hardly changed, the vibration leakage is little and a detecting efficiency is very high.

When acceleration is applied in the direction orthogonal to the main surface of the vibrating body 14 of the vibrator 12, the vibrating body 14 bends together with the piezoelectric elements 16a-16d responsive to the acceleration, and voltages produced in the piezoelectric elements 16a-16d are changed by impedance change of the piezoelectric elements 16a-16d responsive to the flexure. Thus, by measuring the voltage change caused by the impedance change of either of the piezoelectric elements 16a-16d, the acceleration can be detected.

In the acceleration sensor 10 of the second embodiment, since the hole 14a is formed at the nodal portion on one end side of the vibrating body 14, the flexure of the vibrating body caused by the acceleration is increased, and a stable vibrating balance in the longitudinal direction of the vibrating body 14 is maintained, thus the vibration in the longitudinal direction of the vibrating body 14 is stabilized. Thus, the acceleration sensor 10 of the second embodiment also has a good acceleration detecting sensitivity.

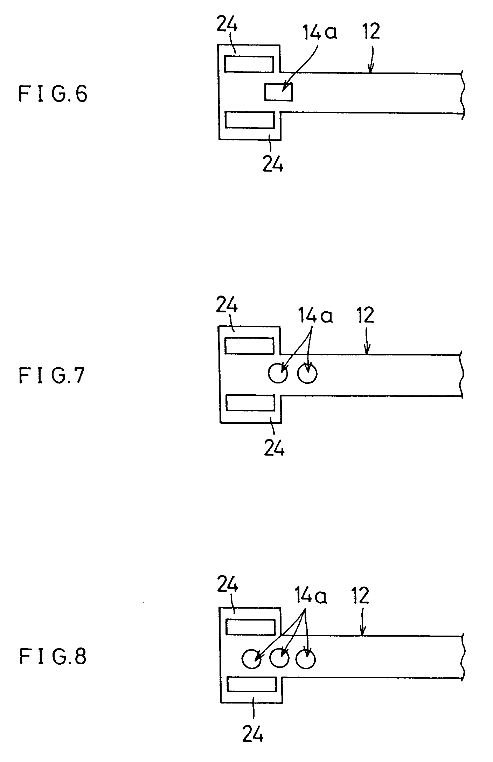

A shape of the hole 14a is not restricted to a circle, as shown in Fig. 6, it may have other shapes such as a square, a rectangle, a triangle and the like.

As shown in Fig. 7, two holes 14a may be formed in series in the longitudinal direction of the vibrating body 14. Furthermore, as shown in Fig. 8, three holes 14a may be formed in series in the longitudinal direction of the vibrating body 14. In these cases, the flexure of the vibrating body 14 can be increased more.

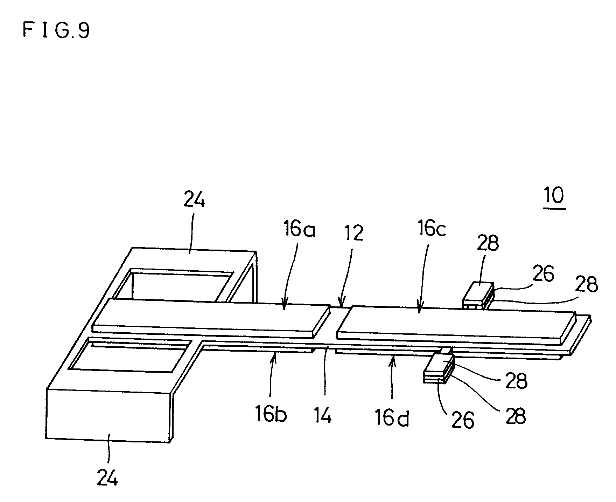

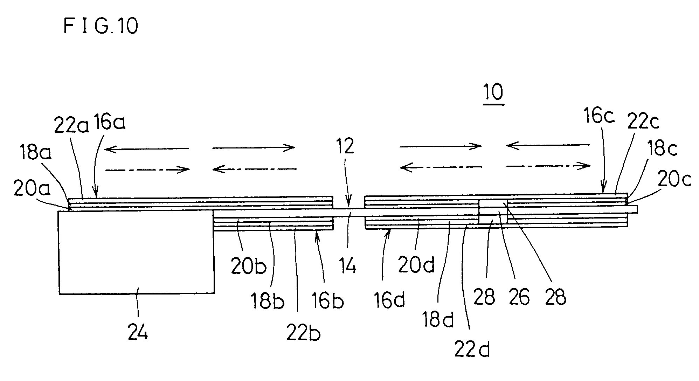

Fig. 9 is a perspective view showing a third embodiment of the present invention, and Fig. 10 is a side view of the third embodiment. The acceleration sensor 10 of the third embodiment includes a vibrator 12 which vibrates in a longitudinal direction as same as the second embodiment shown in Fig. 4 and Fig. 5.

On one end side in the longitudinal direction of the vibrator 12, as same as the second embodiment, two supporting members 24 are formed.

Furthermore, on the other end side in the longitudinal direction of the vibrator 12, for example, two protrusion-type fixing members 26 are formed. In this case, the fixing members 26 are extended laterally from the nodal portion on the other end side in the longitudinal direction of the vibrating body 14, and are formed integrally with the vibrating body 14. On both main surfaces of the fixing members 26, weights 28 are fixed by bonding, welding or soldering. The weights 28 are designed to increase the flexure of the vibrating body 14 caused by acceleration.

In the acceleration sensor 10 of the third embodiment, as same as the second embodiment, the vibrator 12 vibrates in the longitudinal direction as shown by arrows with solid lines and arrows with one-dot-chain lines in Fig. 10, thereby the acceleration can be detected.

In the acceleration sensor 10 of the third embodiment, since the weights 28 are fixed to the fixing members 26 in the vicinity of the nodal portion of the vibrator 12, even when the strength of the vibrator 12 for supporting the weights 28 is strengthened, vibration of the vibrator 12 is hardly transmitted to the weights 28, thus it is not hindered by the weights 28. Thus, in the acceleration sensor 10 of the third embodiment, displacement of the weights 28 caused by the acceleration can be easily transmitted to the vibrator 12, improving the acceleration detecting sensitivity.

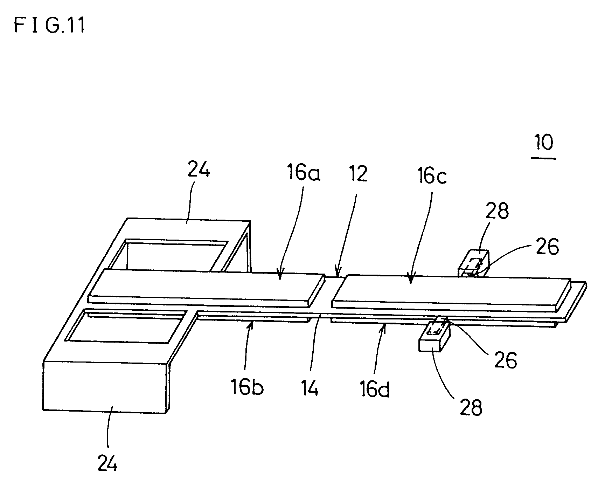

Fig. 11 is a perspective view showing a fourth embodiment of the present invention. In the acceleration sensor 10 of the fourth embodiment, as compared with the third embodiment shown in Fig. 9 and Fig. 10, each fixing member 26 is formed into a bar shape and weights 28 are fixed around tips of the fixing members 26.

In the acceleration sensor 10 of the fourth embodiment, since the weights 28 are fixed to the fixing members 26 in the vicinity of the nodal portion of the vibrator 12 as same as the third embodiment, even when the strength of the vibrator 12 for supporting the weights 28 is strengthened, vibration of the vibrator 12 is hardly transmitted to the weights 28, thus it is not hindered by the weights 28. Thus, in the acceleration sensor 10 of the fourth embodiment, displacement of the weights 28 caused by acceleration can be easily transmitted to the vibrator 12, improving the acceleration detecting sensitivity.

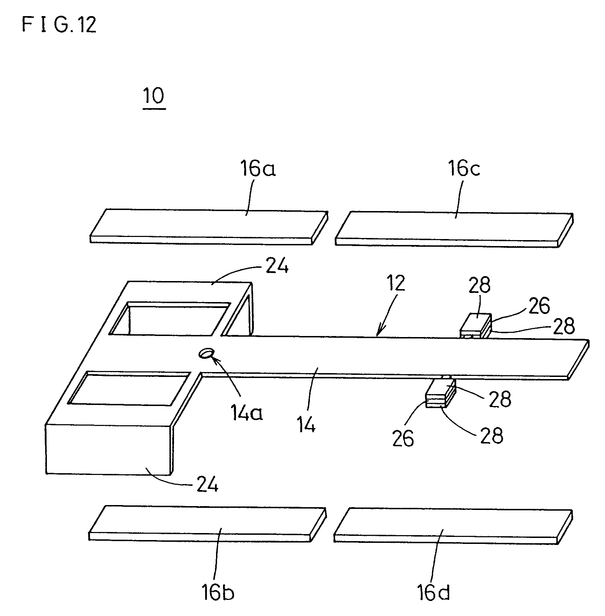

Fig. 12 is an exploded perspective view showing a fifth embodiment of the present invention. In the acceleration sensor 10 of the fifth embodiment, as compared with the third embodiment shown in Fig. 9 and Fig. 10, since a circular hole 14a is formed at the nodal portion on the supporting side of the vibrating body 14 of the vibrator 12, the flexure of the vibrating body 14 caused by acceleration is increased, results in a good acceleration detecting sensitivity.

Meanwhile, in the acceleration sensor 10 of the fifth embodiment, as same as the third embodiment, the vibrator 12 vibrates in the longitudinal direction to detect the acceleration.

Furthermore, in the acceleration sensor 10 of the fifth embodiment, as same as the third embodiment, since weights 28 are fixed to fixing members 26 in the vicinity of the nodal portion of the vibrator 12, the flexure of the vibrating body 14 caused by acceleration is large and the acceleration detecting sensitivity is high, and vibration of the vibrator 12 is hardly transmitted to the weights 28, thus it is not hindered by the weights 28.

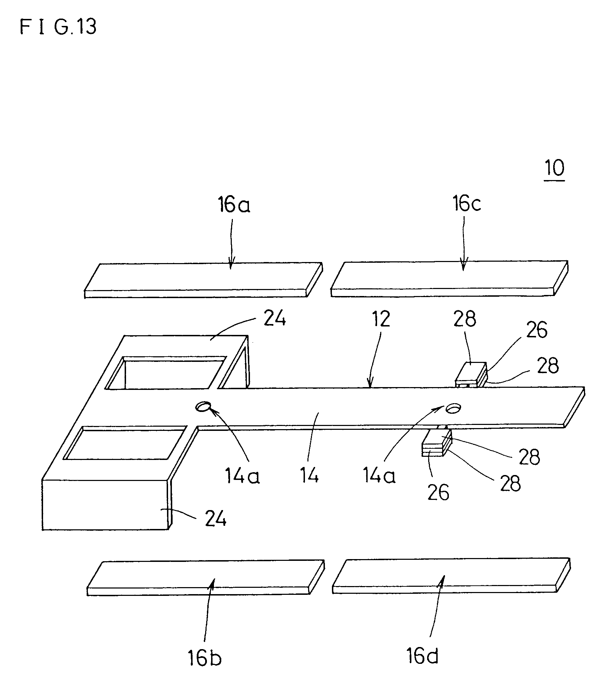

Fig. 13 is an exploded perspective view showing a sixth embodiment of the present invention. In the acceleration sensor 10 of the sixth embodiment, as compared with the fifth embodiment shown in Fig. 12, circular holes 14a are respectively formed at the two nodal portions of the vibrating body 14 of the vibrator 12. The holes 14a are designed to increase the flexure of the vibrating body 14 caused by acceleration, and to stabilize vibration of the vibrating body 14 in the longitudinal direction.

In the acceleration sensor 10 of the sixth embodiment, as same as the fifth embodiment, the vibrator 12 vibrates in the longitudinal direction to detect the acceleration.

In the acceleration sensor 10 of the sixth embodiment, since the holes 14a are formed at the two nodal portions of the vibrating body 14, the flexure of the vibrating body 14 caused by the acceleration is increased and a stable vibration balance in the longitudinal direction of the vibrating body 14 is maintained, thus the vibration in the longitudinal direction of the vibrating body 14 is stabilized. Thus, the acceleration sensor 10 of the sixth embodiment has a good acceleration detecting sensitivity.

Furthermore, in the acceleration sensor 10 of the sixth embodiment, as same as the fifth embodiment, since weights 28 are fixed to fixing members 26 in the vicinity of the nodal portion of the vibrator 12, the flexure of the vibrating body 14 caused by the acceleration is large and the acceleration detecting sensitivity is high, and vibration of the vibrator 12 is hardly transmitted to the weights 28, thus it is not hindered by the weights 28.

In the sixth embodiment shown in Fig. 13, though each circular hole 14a is formed at each of the two nodal portions of the vibrating body 14, a shape of the hole formed at the nodal portion is not restricted to a circle, it may have other shapes such as a square, and also the number of the holes formed at one nodal portion is not restricted to one, it may be two or more.

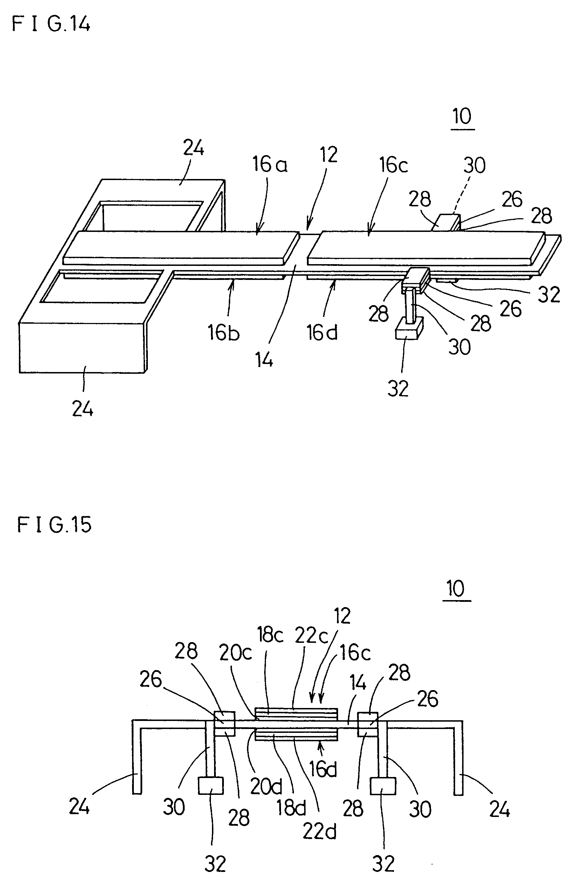

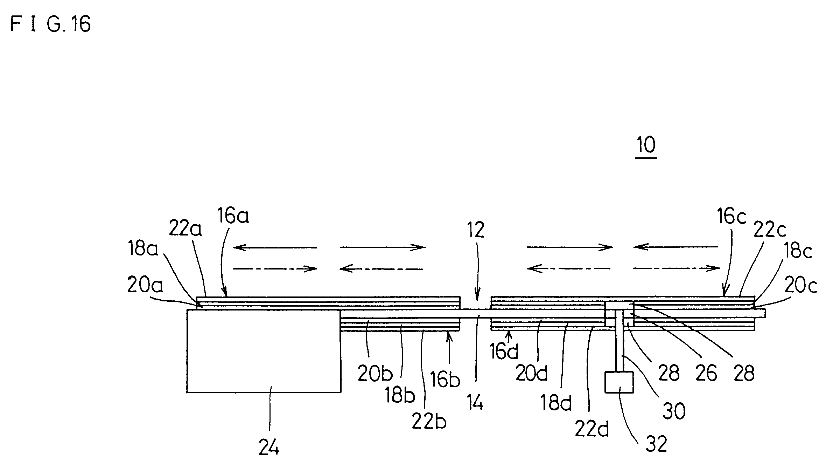

Fig. 14 is a perspective view showing a seventh embodiment of the present invention, Fig. 15 is a front view of the seventh embodiment, and Fig. 16 is a side view of the seventh embodiment. In the acceleration sensor 10 of the seventh embodiment, as compared with the third embodiment shown in Fig. 9 and Fig. 10, supporting pieces 30 extending downward are fixed to two fixing members 26 integrally therewith. At lower ends of the supporting pieces 30, dampers 32 consisting of, for example, rubber blocks as elastic members are fixed respectively. The dampers 32 are designed to elastically support the vibrator 12 in the vicinity of the nodal portion on the other end side in the longitudinal direction of the vibrator 12.

In the acceleration sensor 10 of the seventh embodiment, as same as the third embodiment, the vibrator 12 vibrates in the longitudinal direction as shown by arrows with solid lines and arrows with one-dot-chain lines in Fig. 16 to detect the acceleration.

In the acceleration sensor 10 of the seventh embodiment, the vibrator 12 is firmly supported by the supporting members 24 in the vicinity of one nodal portion, and is elastically supported by the dampers 32 as the elastic members in the vicinity of the other nodal portion. Thus, resonance of the vibrator 12 is restricted by the dampers 32. Accordingly, the acceleration detecting sensitivity is improved in the acceleration sensor 10 of the seventh embodiment.

Furthermore, in the acceleration sensor 10 of the seventh embodiment, as same as the third embodiment, since weights 28 are fixed to fixing members 26 in the vicinity of the nodal portion of the vibrator 12, the flexure of the vibrating body 14 caused by acceleration is large and the acceleration detecting sensitivity is high, and vibration of the vibrator 12 is hardly transmitted to the weights 28, thus it is not hindered by the weights 28.

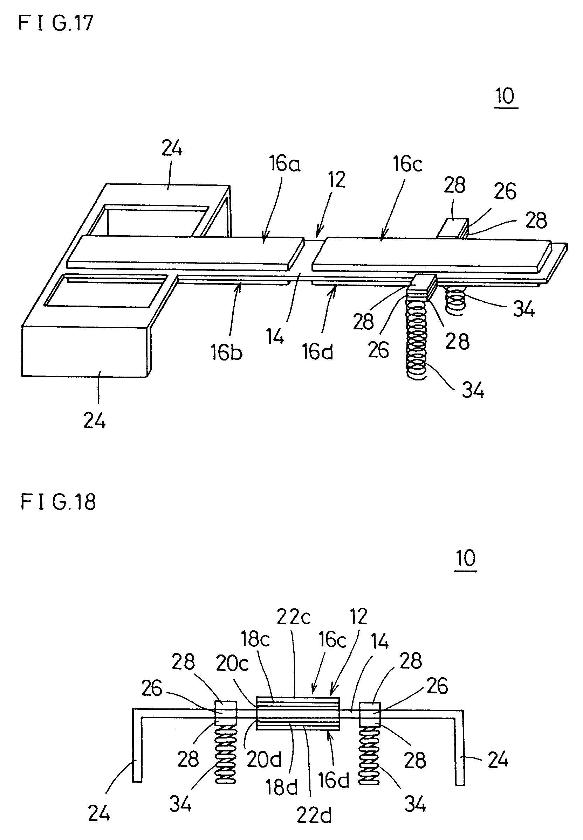

Fig. 17 is a perspective view showing an eighth embodiment of the present invention, and Fig. 18 is a front view of the eighth embodiment. In the eighth embodiment, as compared with the seventh embodiment shown in Fig. 14 through Fig. 16, in place of the supporting pieces 30 and the dampers 32, at lower portions of the two fixing members 26, coil springs 34 as elastic members are fixed respectively. The coil springs 34 are designed to elastically support the vibrator 12 in the vicinity of the nodal portion on the other end side in the longitudinal direction of the vibrator 12.

In the eighth embodiment, as same as the seventh embodiment, the vibrator 12 is firmly supported by the supporting members 24 in the vicinity of one nodal portion, and is elastically supported by the coil springs 34 as the elastic members in the vicinity of the other nodal portion. Thus, resonance of the vibrator 12 is restricted by the coil springs 34, improving the acceleration detecting sensitivity. The same effect is obtained by using plate springs in place of the coil springs 34.

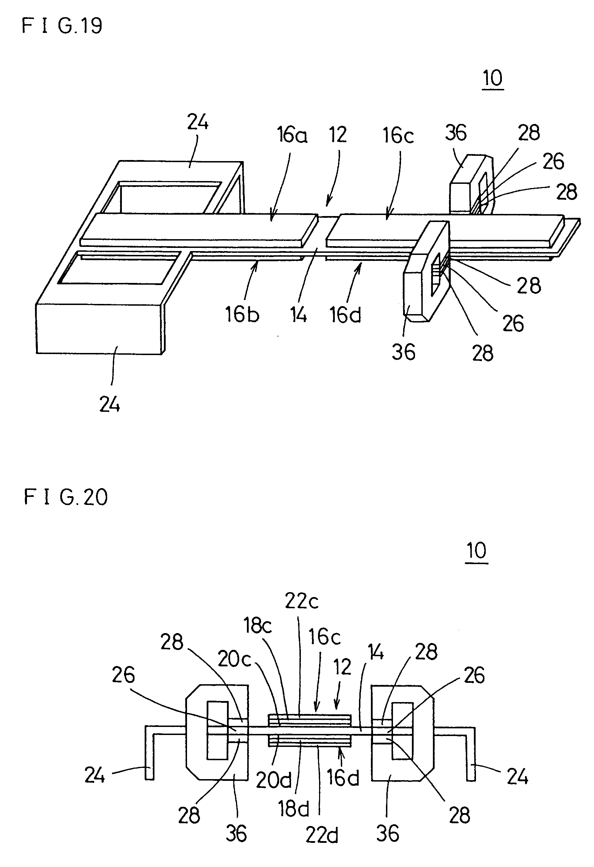

Fig. 19 is a perspective view showing a ninth embodiment of the present invention, and Fig. 20 is a front view of the ninth embodiment. In the ninth embodiment, particularly, dampers 36 consisting of approximately D-shaped rubber as elastic members are respectively fixed to two fixing members 26 and weights 28. The dampers 36 are designed to elastically support the vibrator 12 in the vicinity of the nodal portion on the other end side in the longitudinal direction of the vibrator 12.

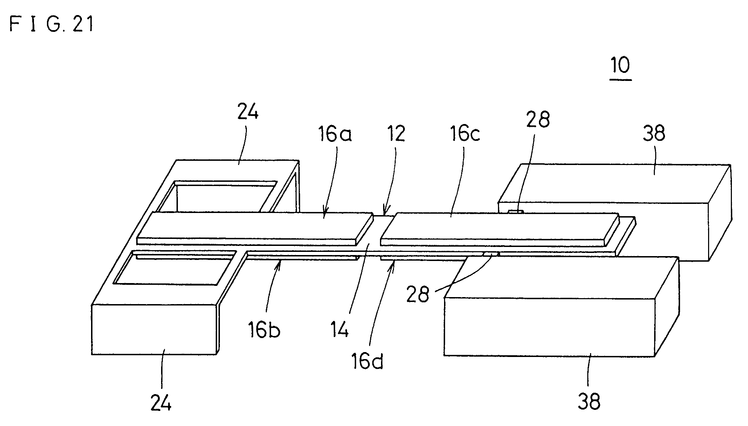

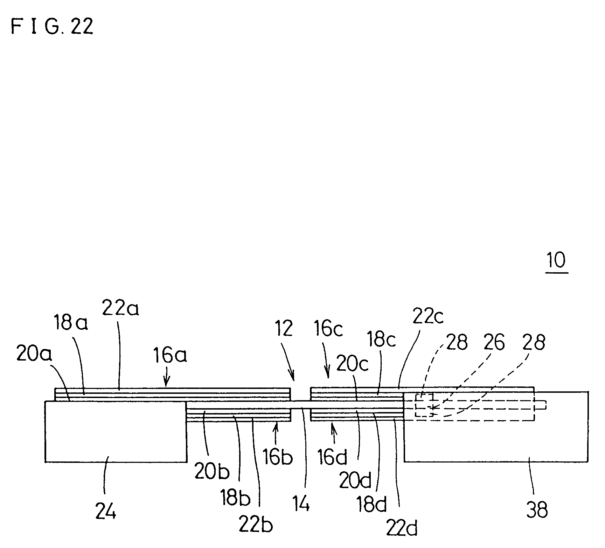

Fig. 21 is a perspective view showing a tenth embodiment of the present invention, and Fig. 22 is a side view of the tenth embodiment. In the tenth embodiment, particularly, dampers 38 consisting of large rubber blocks as elastic members are respectively fixed to two fixing members 26 and weights 28. The dampers 38 are also designed to elastically support the vibrator 12 in the vicinity of the nodal portion on the other end side in the longitudinal direction of the vibrator 12.

In the ninth embodiment and the tenth embodiment, since the vibrator 12 is firmly supported by the supporting members 24 in the vicinity of one nodal portion, and is elastically supported by the dampers 36 or 38 as the elastic members in the vicinity of the other nodal portion, resonance of the vibrator 12 is restricted by the dampers 36 or 38, improving the acceleration detecting sensitivity.

Though the damper consisting of rubber or the spring is used as the elastic member in the seventh to tenth embodiments shown in Fig. 14 through Fig. 22, as the elastic member used in the acceleration sensor according to the present invention, the elastic material other than rubber may be used and its shape may be changed optionally.

In the third to tenth embodiments shown in Fig. 9 through Fig. 22, though the vibrator has two nodal portions, the weights are fixed in the vicinity of one nodal portion, and the vicinity of the other nodal portion is supported by the support members, in the present invention, a vibrator may have threes or more nodal portions, a weight may be fixed in a vicinity of one nodal portion, and in a vicinity of another nodal portion may be supported by a supporting member.

Furthermore, in the second to tenth embodiments shown in Fig. 4 through Fig. 22, the acceleration can be detected also by detecting the difference of the voltages produced in the piezoelectric elements 16a and 16b, or the difference of the voltages produced in the piezoelectric elements 16c and 16d.

In the second to tenth embodiments shown in Fig. 4 through Fig. 22, the polarizing direction of the piezoelectric layers of one or more piezoelectric elements may be reversed, and the phase of driving signals applied to the piezoelectric elements whose polarizing direction is reversed may be reversed.

Meanwhile, in the first to tenth embodiments shown in Fig. 1 through Fig. 22, the reason for vibrating the vibrator at the resonance frequency in the longitudinal direction is that, the impedance change of the piezoelectric element caused by the flexure can be increased by the resonance characteristic to increase the sensitivity, and the rest acceleration or DC component can be detected.

It will be apparent from the foregoing that, while the present invention has been described in detail and illustrated, these are only particular illustrations and examples, and the present invention is not limited to these. The spirit and scope of the present invention are limited only by the appended claims.

## Claims

1. An acceleration sensor comprising:
a plate-shaped vibrating body;
piezoelectric elements oppositely formed on both surfaces of said vibrating body; and
a supporting means for supporting a vicinity of one end portion of said vibrating body;
wherein a hole is formed in the vicinity of one end portion of said vibrating body supported by said supporting means.

2. An acceleration sensor according to claim 1, wherein a plurality of said holes are formed in the vicinity of one end portion of said vibrating body.

3. An acceleration sensor according to claim 1, wherein said hole is formed at a nodal portion of said vibrating body.

4. An acceleration sensor according to claim 2, wherein said holes are formed at a nodal portion of said vibrating body.

5. An acceleration sensor according to claim 1, wherein a plurality of sets of said piezoelectric elements are oppositely formed on both surfaces of said vibrating body, and
said vibrating body vibrates in its longitudinal direction so that both sides of the center in its longitudinal direction are extended and contracted reversely.

6. An acceleration sensor according to claim 2, wherein a plurality of sets of said piezoelectric elements are oppositely formed on both surfaces of said vibrating body, and
said vibrating body vibrates in its longitudinal direction so that both sides of the center in its longitudinal direction are extended and contracted reversely.

7. An acceleration sensor according to claim 3, wherein a plurality of sets of said piezoelectric elements are oppositely formed on both surfaces of said vibrating body, and
said vibrating body vibrates in its longitudinal direction so that both sides of the center in its longitudinal direction are extended and contracted reversely.

8. An acceleration sensor according to claim 4, wherein a plurality of sets of said piezoelectric elements are oppositely formed on both surfaces of said vibrating body, and
said vibrating body vibrates in its longitudinal direction so that both sides of the center in its longitudinal direction are extended and contracted reversely.

9. An acceleration sensor having a cantilever structure and comprising, a vibrator which vibrates in a longitudinal direction and has two or more nodal portions,
wherein a weight is fixed in a vicinity of one of said nodal portions of said vibrator.

10. An acceleration sensor according to claim 9, wherein said vibrator comprises
a plate-shaped vibrating body, and
piezoelectric elements formed on both main surfaces of said vibrating body.

11. An acceleration sensor according to claim 9, which further comprises a supporting member for supporting said vibrator formed in a vicinity of another of said nodal portions of said vibrator.

12. An acceleration sensor according to claim 10, which further comprises a supporting member for supporting said vibrator formed in a vicinity of another of said nodal portions of said vibrator.

13. An acceleration sensor having a cantilever structure and comprising, a plate-shaped vibrating body which vibrates in a longitudinal direction and has two nodal portions,
wherein a hole is formed at said nodal portion on the supporting side of said vibrating body.

14. An acceleration sensor according to claim 13, wherein said vibrating body is supporting in a vicinity of one of said nodal portions, and
a weight is fixed in a vicinity of the other of said nodal portions of said vibrating body.

15. An acceleration sensor having a cantilever structure and comprising, a vibrator which vibrates in a longitudinal direction and has two nodal portions, and further comprising,
a supporting member for firmly supporting said vibrator in a vicinity of one of said nodal portions, and
an elastic member for elastically supporting said vibrator in a vicinity of the other of said nodal portions.

16. An acceleration sensor according to claim 15, which further comprises a weight fixed in the vicinity of the other of said nodal portions of said vibrator.

17. An acceleration sensor according to claim 15, wherein said elastic member consists of an elastic material.

18. An acceleration sensor according to claim 16, wherein said elastic member consists of an elastic material.

19. An acceleration sensor according to claim 15, wherein said elastic member includes a spring.

20. An acceleration sensor according to claim 16, wherein said elastic member includes a spring.
